Europäisches Patentamt

European Patent Office

Office européen des brevets

(19)

(11) **EP 0 827 303 B1**

(12) **FASCICULE DE BREVET EUROPEEN**

(45) Date de publication et mention
de la délivrance du brevet:
**28.04.2004   Bulletin 2004/18**

(51) Int Cl.[7]: **H04L 5/06**

(21) Numéro de dépôt: **97460032.2**

(22) Date de dépôt: **27.08.1997**

(54) **Synchronisation dans un récepteur AMRF**

Synchronisierung in einem FDMA-Empfänger

Synchronisation in an FDMA receiver

(84) Etats contractants désignés:
**DE GB**

(30) Priorité: **27.08.1996   FR 9610670**

(43) Date de publication de la demande:
**04.03.1998   Bulletin 1998/10**

(73) Titulaires:
- **FRANCE TELECOM**
  **75015 Paris (FR)**
- **TELEDIFFUSION DE FRANCE**
  **75732 Paris Cédex 15 (FR)**

(72) Inventeurs:
- **Castelain, Damien**
  **35000 Rennes (FR)**
- **Callonnec, Denis**
  **35000 Rennes (FR)**
- **Bauduin, Jean-Pierre**
  **35270 Combourg (FR)**

(74) Mandataire: **Vidon, Patrice**
**Cabinet Vidon**
**16 B, rue Jouanet - B.P. 90333**
**Technopole Atalante**
**35703 Rennes Cedex 7 (FR)**

(56) Documents cités:
**WO-A-94/11961**          **WO-A-95/34149**

- **WALKER & CANTONI: "A new design for a frame sampling synchronizer" INTERNATIONAL SYMPOSIUM ON CIRCUITS AND SYSTEMS, vol. 3, 30 mai 1994 - 2 juin 1994, NEW YORK, US, pages 97-100, XP000493240**
- **VALLET; TAIEB: "Fraction spaced multi-carrier modulation" WIRELESS PERSONAL COMMUNICATIONS., vol. 2, 1995, AMSTERAM, NL, pages 97-103, XP000589614**

## Description

Le domaine de l'invention est celui des systèmes de communication mettant en oeuvre des accès multiples par répartition en fréquence (AMRF). Plus précisément, l'invention concerne de tels systèmes dans lesquels des fréquences porteuses émises par plusieurs terminaux (ou, plus généralement, stations émettrices) sont reçues et traitées sous la forme d'un signal unique (multiplex de fréquences porteuses) dans une station de base (ou, plus généralement, station réceptrice).

Un système mettant en oeuvre cette technique est par exemple décrit dans la demande de brevet FR-93 10339, au nom des mêmes déposants que la présente demande. Dans ce système, plusieurs terminaux (appelés stations réparties) se voient affecter une ou plusieurs fréquences porteuses, choisies parmi une pluralité de fréquences porteuses.

Ces fréquences porteuses sont modulées indépendamment dans chaque terminal, et émises de manière synchronisée. On obtient ainsi, vu d'une station de base (appelée station centrale), un multiplex de fréquences porteuses orthogonales, qui peut être traité comme un signal unique, en effectuant une seule opération de démodulation, mettant en oeuvre notamment une transformation mathématique (une FFT par exemple).

Cette technique s'avère particulièrement avantageuse, car chaque terminal n'émet qu'une ou qu'un petit nombre de fréquences porteuses. Ainsi, leur réalisation est relativement simple, et la puissance nécessaire est limitée. De même, la station de base reste relativement simple, car elle ne reçoit qu'un unique signal.

Un domaine particulier de l'invention est celui de la télévision numérique, dans les systèmes prévoyant une voie de retour des récepteurs de télévision vers l'émetteur du signal de télévision. Les voies de retour sont connues depuis longtemps, notamment dans le cadre des réseaux de télévision câblés. Elles peuvent être utilisées en particulier pour transmettre des données permettant une interactivité entre l'utilisateur du récepteur et le programme émis (participation à des jeux ou des sondages par exemple).

L'invention peut être appliquée sur toutes les voies de retour (câble, voie hertzienne) basées sur un système AMRF, pour des émetteurs fixes, portables ou mobiles.

Plus généralement, l'invention est applicable dans tous les cas où une communication AMRF est mise en oeuvre, que celle-ci soit une transmission multipoint à point ou point à point, qu'elle soit ou non symétrique.

Ainsi, par exemple, l'invention peut également être mise en oeuvre dans des réseaux locaux reliant une pluralité de stations, chacun d'entre eux jouant le rôle de terminal selon la définition ci-dessus, pour émettre, et de station de base, toujours selon la définition ci-dessus, en réception.

Le système décrit dans la demande de brevet FR-93 10339 déjà citée présente toutefois un inconvénient, à savoir celui de la synchronisation temporelle des différents terminaux.

On conçoit en effet aisément que les temps de propagation des terminaux vers la station de base (et inversement) sont différents, en fonction de la distance les séparant. Si tous les terminaux se synchronisent sur un signal de synchronisation, diffusé par la station de base, et émettent sans précaution supplémentaire, la station de base ne recevra pas un signal unique cohérent, et ne pourra pas assurer la démodulation de toutes les fréquences porteuses.

Pour pallier cet inconvénient, on prévoit un asservissement par une boucle de contre-réaction effectué émetteur par émetteur : la station de base mesure le décalage temporel du signal reçu depuis chaque émetteur et envoie ce décalage, ou une information équivalente à l'émetteur. Ce dernier réajuste son instant d'émission en conséquence, et ainsi de suite jusqu'à obtention d'une bonne compensation des délais de propagation aller/retour entre la station de base et l'émetteur.

Cette méthode présente cependant plusieurs inconvénients.

Tout d'abord, elle conduit à une augmentation de la complexité de chaque terminal d'émission, alors qu'il est souhaitable, dans de nombreuses applications telles que les voies de retour, qu'il soit le plus simple et le moins coûteux possible. De même, le récepteur de la station de base est rendu plus complexe, puisqu'il doit gérer le traitement des décalages.

Par ailleurs, cette technique nécessite l'allocation d'une bande à un protocole d'échange de données, pour mettre en oeuvre ce protocole. Outre la complexité, il s'en suit de façon inhérente une perte d'efficacité spectrale.

Le délai nécessaire à cette procédure d'asservissement par contre-réaction est encore un autre inconvénient. En particulier, cette méthode est pratiquement incompatible avec des terminaux mobiles, la procédure devant alors être réitérée de façon quasi-permanente.

L'invention a notamment pour objectif de pallier ces différents inconvénients de l'état de la technique.

Plus précisément, un objectif de l'invention est de fournir un système mettant en oeuvre une démodulation à faible coût d'un signal multiporteuses AMRF constitué par la contribution de plusieurs terminaux distants, qui permettent de s'affranchir d'un asservissement temporel par contre-réaction (synchronisation) entre les terminaux et la station de base.

Ainsi, un objectif de l'invention est de fournir un tel système, qui ne nécessite pas de moyens et de traitements complexes dans les terminaux, de façon que ceux-ci restent simples et peu coûteux.

Un autre objectif de l'invention est de fournir un tel système, qui permette (par rapport aux systèmes connus) d'augmenter l'efficacité spectrale.

Encore un autre objectif de l'invention est de fournir un tel système, qui puisse être mis en oeuvre sur tout type de canal de transmission (câble, transmission hertzienne,...), et pour tout type de terminaux, qu'ils soient fixes, portables ou mobiles.

Ces objectifs ainsi que d'autres qui apparaîtront par la suite, sont atteints selon l'invention à l'aide d'un dispositif de réception d'un signal AMRF constitué par un multiplex de fréquences porteuses modulées émises par au moins deux terminaux distincts, dispositif comprenant au moins deux chaînes de démodulation parallèles, chacune desdites chaînes de démodulation appliquant notamment sur ledit signal AMRF :

- une fenêtre temporelle de réception de symbole débutant avec un retard de chaîne supérieur ou égal à zéro, par rapport à une référence de synchronisation, lesdits retards de chaîne étant tous différents ; et préférentiellement,
- un filtrage multiporteuse de Nyquist.

Ainsi, selon l'invention, on n'impose pas une synchronisation très précise des terminaux (une synchronisation aveugle sur un signal de synchronisation émis par la station de base est par exemple suffisant). C'est à la réception que l'on assure une démodulation sélective, en fonction des retards de propagation.

Plus précisément, le signal reçu est considéré, dans son ensemble, avec plusieurs (au moins deux) retards différents. Chaque fréquence porteuse peut donc ainsi, quelque soit son retard, être démodulée correctement dans l'une ou l'autre des chaînes de démodulation.

Pour obtenir ce résultat, on met en oeuvre un filtrage multiporteuse de Nyquist (également appelé banc de filtres polyphasés), qui agit indépendamment sur chaque fréquence porteuse. Cette technique, connue en soi, est par exemple décrite dans l'article "Fraction Spaced Multi-Carrier Modulation", de Robert Vallet et Kais Haj Taieb (Wireless Personal Communication, Special Issue on Multicarrier Communications, 1995).

De façon avantageuse, lesdits retards de chaîne sont proportionnels et valent :

$$T_k = 2.k.\Delta$$

où :

$\Delta$ est un retard de base prédéfini, qui correspond à la tolérance sur la synchronisation temporelle de signaux reçus ;
k est un entier variant de 0 à K-1 ;
K est le nombre de chaînes de démodulation.

Préférentiellement, ledit retard de base $\Delta$ est le retard maximum que chacune desdites chaînes est capable de traiter. Le nombre de chaînes de démodulation est alors, pour couvrir tous les cas de figure :

$$K = \text{Partie-entière } ((T_p)_{max}/2.\Delta) + 1,$$

où $(T_p)_{max}$ est le délai de propagation maximum dans un échange aller-retour de communication entre ledit dispositif de réception et un desdits terminaux.

Selon une caractéristique avantageuse de l'invention, le dispositif comprend des moyens de sélection alimentés par l'ensemble desdites chaînes de démodulation et associant à chacune desdites fréquences porteuses, et à chaque intervalle de temps, la sortie de l'une desdites chaînes de traitement, selon un critère de sélection prédéterminé.

On choisit donc l'une des chaînes de traitement, pour chaque fréquence porteuse. On peut notamment prévoir que chacune desdites chaînes de démodulation comprend des moyens de validation de la démodulation de chacune desdites fréquences porteuses, selon un critère de validation prédéterminé (décodage de bloc), et que ledit critère de sélection consiste à retenir la sortie de la chaîne de démodulation répondant audit critère de validation et présentant le retard de chaîne le plus faible.

Selon une caractéristique préférentielle de l'invention, chacune desdites chaînes de démodulation comprend des moyens de démodulation par application d'une transformation mathématique.

Il peut notamment s'agir, classiquement, d'une transformée de Fourier (FFT).

Avantageusement, chacune desdites chaînes de démodulation peut comprendre notamment:

- des moyens d'application dudit retard de chaîne ;
- des moyens de filtrage ;
- une transformation de Fourier ;
- des moyens de décodage des données portées par chacune desdites fréquences porteuses ;
- des moyens de validation dudit décodage, pour chacune desdites fréquences porteuses.

Selon un mode de réalisation particulier de l'invention, les signaux portés par chacune desdites fréquences porteuses sont codés par bloc, et ledit dispositif comprend des moyens d'émission d'un acquittement, lorsqu'un bloc reçu est validé par au moins une desdites chaînes de démodulation.

L'invention concerne également un procédé de réception d'un signal constitué par un multiplex de fréquences porteuses modulées émises par au moins deux terminaux distincts. Un tel procédé comprend notamment au moins deux étapes de démodulation effectuées en parallèle sur l'ensemble dudit signal AMRF, chacune desdites étapes appliquant sur ledit signal AMRF une fenêtre temporelle de réception de symbole débutant avec un retard de chaîne supérieur ou égal à zéro, par rapport à une référence de synchronisation, lesdits retards de chaîne étant tous différents.

L'invention concerne encore un système de transmission de données entre au moins deux terminaux et une station de base, chacun desdits terminaux modulant au moins une fréquence porteuse, lesdites fréquences porteuses étant organisées de façon à former un signal AMRF unique, dans lequel ladite station de base comprend au moins deux chaînes de démodulation parallèles, chacune desdites chaînes de démodulation appliquant sur ledit signal AMRF une fenêtre temporelle de réception de symbole débutant avec un retard de chaîne supérieur ou égal à zéro, par rapport à une référence de synchronisation, lesdits retards de chaîne étant tous différents.

D'autres caractéristiques et avantages de l'invention apparaîtront clairement à la lecture de la description suivante d'un mode de réalisation préférentiel, donné à titre de simple exemple illustratif et non limitatif, et des dessins annexés, parmi lesquels :

- la figure 1 présente un synoptique simplifié d'un récepteur d'une station de base de type connu, dans un système à accès multiples de type AMRF ;
- la figure 2 est un synoptique simplifié d'un récepteur d'une station de base selon l'invention, adapté à la réception d'un signal AMRF asynchrone ;
- le figure 3 illustre le cas idéal d'un symbole reçu parfaitement synchrone avec la fenêtre de sélection du récepteur ;
- le figure 4 illustre un cas problématique, régulièrement rencontré dans la pratique, et qui ne peut être traité par le récepteur de la figure 1 ;
- la figure 5 illustre le principe de fonctionnement du récepteur selon l'invention, tel qu'illustré en figure 2, et correspondant à la situation illustrée en figure 4.

L'invention concerne donc la réception d'un signal AMRF formé d'un multiplex de fréquences porteuses émises par plusieurs terminaux. Comme déjà indiqué, l'invention peut s'appliquer à tous types de canal de transmission, et à tous types de stations émettrices et/ou réceptrices.

L'exemple décrit par la suite concerne plus précisément, mais non limitativement, la réalisation d'une voie de retour. Un tel système comprend une pluralité de terminaux distants, ou stations esclaves, qui émettent vers une station de base.

Cette technique permet la réalisation de stations esclaves à faible coût, chacune d'entre elles assurant la modulation et l'émission d'une porteuse unique à faible débit (il est bien sûr également possible que chaque station esclave module plusieurs fréquences porteuses).

En général, les stations esclaves sont répartis sur une zone de service autour de de la station de base, à des distances terminal-station de base $D_i$ (avec $D_i<R$, où R est le rayon de service pour le système de diffusion autour de la station de base. Comme on le verra par la suite, dans le cadre de l'invention, les distances $D_i$ peuvent varier dans le temps (stations mobiles).

On considère par la suite que la durée d'un symbole de modulation est Ts. La vitesse de modulation est donc 1/Ts.

Les fréquences porteuses sont asservies en fréquences sur une référence commune, par exemple diffusée par la station de base.

Les porteuses émises sont espacées de $\Delta$fs , avec :

$$\Delta\text{fs} > ((1 + \alpha)/\text{Ts})$$

ou $\alpha$ est le facteur de retombée ("roll-off" en anglais) du filtrage. Les spectres des fréquences porteuses sont disjoints. En ce sens, les signaux émis en AMRF sont orthogonaux.

Pour que le signal reçu par la station de base puisse être traité de façon globale à l'aide d'un seul tuner et d'une seule FFT, il faut que les différentes fréquences porteuses arrivent de façon synchrone à ce récepteur. Pour cela, les porteuses émises par les émetteurs distants doivent être également asservies en temps.

Pour assurer cet asservissement en temps, la station de base diffuse un top de synchronisation servant de référence de temps. Les émetteurs s'ajustent sur ce top pour émettre leur(s) fréquence(s) porteuse(s).

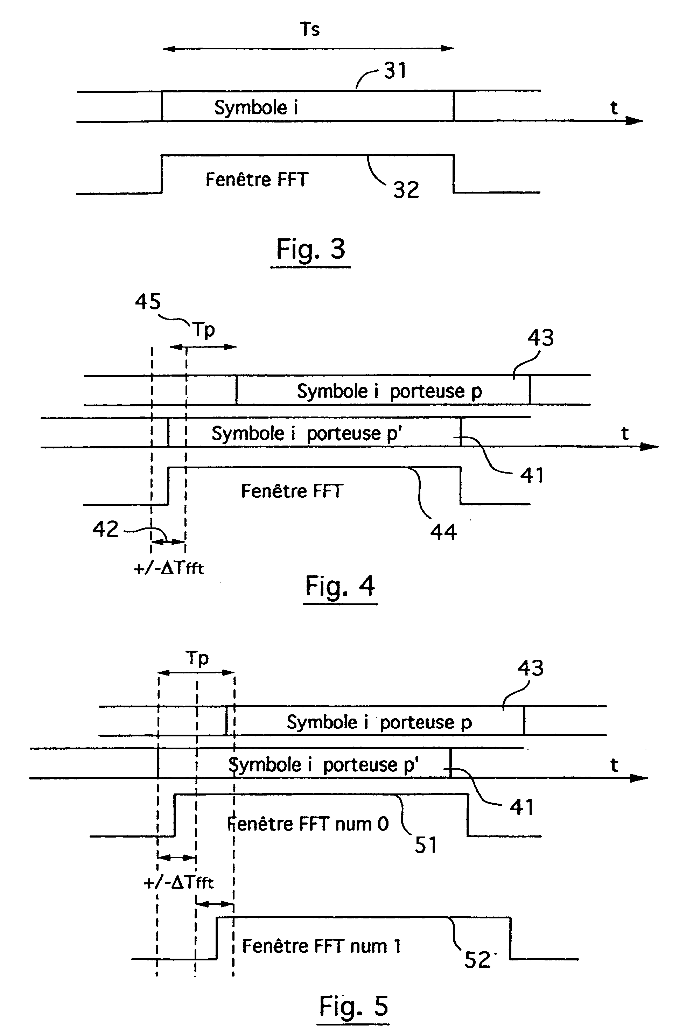

La situation idéale est illustrée en figure 3. L'ensemble des porteuses formant le symbole I 31 sont reçues au même instant qui coïncide avec l'instant d'application de la fenêtre FFT 32 par le récepteur.

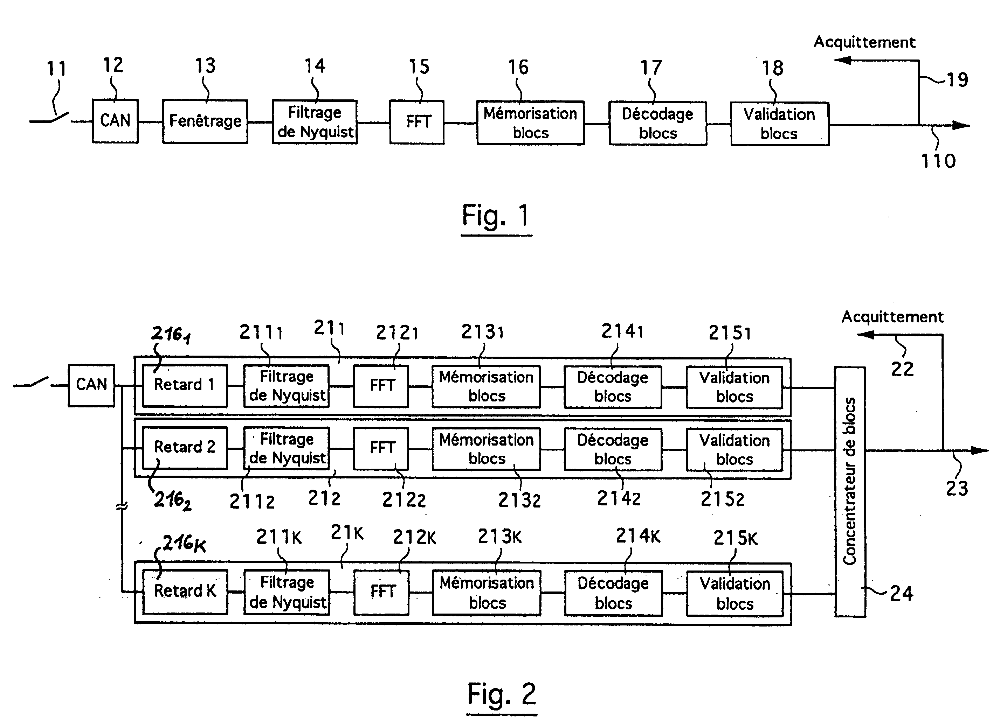

Dans ce cas théorique, parfaitement synchrone, le récepteur classique illustré en figure 1 fonctionne correctement.

Le signal reçu (multiplex AMRF de N porteuses p) ramené en bande de base subit successivement les traitements suivants :

- échantillonnage 11, à la fréquence Ts/N ;
- numérisation 12 ;
- application 13 d'une fenêtre temporelle de longueur multiple de Ts 32 ;
- filtrage multiporteuse de Nyquist 14 ;
- FFT 15 ;
- mémorisation des blocs de symboles sur chaque porteuse 16, dans le cas d'un codage par blocs ;
- décodage des blocs de donnés sur chaque porteuse 17 ;
- validation des blocs sur chaque porteuse 18 (selon un critère de validation prédéterminé) ;
- acquittement 19, si nécessaire et si le bloc est validé ;
- suite du traitement des données 110.

Comme déjà indiqué, cette technique n'est pas suffisante, à cause des délais de propagation différents d'un terminal distant à l'autre. En effet, les différentes distances $D_i$ occasionnent des délais de propagation aller/retour Tp, dans un échange entre chaque terminal et la station de base.

On observe que :

$$0 < Tp < 2R/v,$$

où v est la vitesse de propagation de l'onde électrique dans le milieu (en hertzien, v = c, vitesse de propagation des ondes électromagnétiques dans l'air).

Le circuit de démodulation dans le récepteur de la station de base utilise un traitement par FFT 15 qui peut tolérer des erreurs maximales de synchronisation temporelle sur les signaux reçus inférieures à $\Delta T_{fft}$.

Dans un contexte de système AMRF, cela signifie :

- que les porteuses dont l'erreur de synchronisation absolue est inférieure à $\Delta T_{fft}$ sont correctement démodulées, quel que soit l'état des porteuses adjacentes, dès lors que chacune des porteuses a été filtrée individuellement ;
- que les porteuses dont l'erreur de synchronisation absolue est supérieure à $\Delta T_{fft}$ ne sont pas correctement démodulées.

Cette situation est illustrée par la figure 4. La porteuse p' 41 débute dans la plage de tolérance 42 de $-\Delta T_{fft}$ à $+\Delta T_{fft}$, et sera bien sélectionnée par la fenêtre 44, et donc bien démodulée. En revanche, la porteuse p 43 du même symbole I se présente avec un retard Tp 45 trop important, et ne pourra pas être démodulée correctement.

Pour résoudre ce problème, on a donc prévu, dans les systèmes actuels, des systèmes complexes basés sur des boucles de contre-réaction, qui rendent les terminaux distants complexes et donc coûteux. L'invention propose une technique nouvelle qui permet de s'affranchir de ce problème, en ne tenant compte que du top émis par la station de base.

L'invention consiste essentiellement à :

- diffuser depuis la station de base un "top" de synchronisation sur lequel les terminaux distants se synchronisent en aveugle, c'est-à-dire sans chercher à servir précisément leur instant d'émission ;
- réaliser en parallèle K traitements de filtrage-démodulation-décodage dans la station de base;
- placer derrière ces traitements parallèles un concentrateur de blocs, qui retient pour chaque porteuse émise un bloc décodé et validé quand il existe.

La partie réception d'une telle station de base est illustrée en figure 2. Elle présente K chaînes de trai-tement parallèle $21_1$ à $21_K$, effectuant chacune un traitement comprenant les opérations suivantes :

- un filtrage $211_1$ à $211_K$, préférentiellement du type filtrage multiporteuse de Nyquist ;
- une démodulation par application d'une transformée mathématique $212_1$ $212_K$, telle qu'une FFT, synchronisée sur un instant $T_k$ pour B temps symbole (Ts) consécutif ; une mémorisation $213_1$ à $213_K$ pour chaque porteuse émise dès B symbole consécutif démodulé ;
- un décodage $214_1$ à $214_K$ par bloc (CRC) qui assure une correction des erreurs sur le bloc reçu ;
- une estimation $215_1$ à $215_K$ de la justesse des éléments décodés (validation ou non du bloc décodé) sur chacune des porteuses du multiplex.

Chacune desdites chaînes $21_1$ à $21_K$ débutent par l'application d'un retard $216_1$ à $216_K$. Ces retards sont déterminés de façon que les instants $T_k$ soient les suivants :

$$T_k = 2.k.\Delta$$

où :

$\Delta$ est un retard de base prédéfini ;
k est un entier variant de 0 à K-1.

Dans cette situation, il est possible de traiter toutes les situations possibles avec :

$$K = \text{Partie-entière } ((T_p)_{max}/2.\Delta) + 1$$

La figure 5 illustre ce principe, dans la même situation défavorable que celle discutée en relation avec la figure 4. On constate alors que la porteuse p' 41 peut être traitée par la fenêtre FFT 51 de la chaîne 0, et la porteuse p 43 peut être traitée par la fenêtre FFT 52 de la chaîne 1.

Il suffit alors de sélectionner, pour chaque porteuse, la chaîne ayant pu la traiter correctement. C'est le rôle du concentrateur de blocs 24.

La procédure consiste à traiter les porteuses les unes après les autres. Pour une porteuse p donnée on sonde successivement les sorties Vkp correspondant à ces porteuses sur l'ensemble de chaînes parallèles $21_1$ à $21_K$ jusqu'à ce que l'une de ces sorties affiche un état "bloc porteuse p validé".

Dans ce cas, le bloc est acquitté 22 , si l'application l'exige (transmission d'un message d'acquittement destiné au terminal ayant émis ce bloc), puis traité 23 normalement.

Dans le cas contraire (le bloc correspondant à la porteuse p n'est validé sur aucun des circuits parallèles), aucun acquittement n'est transmis à l'attention de l'émetteur. Il en déduit que son bloc de données n'a pas été reçu normalement et il tente de le le réémettre.

Il est clair que le décodage par bloc décrit ci-dessus n'est qu'une application de l'invention et que de nombreuses autres techniques de codage peuvent être mises en oeuvre.

Comme déjà indiqué, le procédé et le dispositif de l'invention peuvent notamment s'appliquer à un système de rétrodiffusion hertzienne. Un tel système permet à des stations distantes réparties dans la zone de couverture d'un émetteur de télédiffusion de communiquer par une voie de retour hertzienne avec le site de télédiffusion.

On donne à titre d'exemple les caractéristiques d'un système pouvant être mis en oeuvre selon l'invention.

Dans ce système la durée du symbole Ts est d'une milliseconde. La modulation utilisée est une modulation de phase à quatre états MDP4. Le traitement de démodulation FFT autorise (pour une dégradation des performances jugées acceptable) des erreurs de synchronisation de $\Delta T_{fft}$ comprises entre -Ts/10 et Ts/10.

Le rayon de service autour d'un émetteur de télédiffusion est de 70 km. Les délais de propagation aller-retour (correspondant donc à une distance simple comprise entre 0 et 70 km) sont compris entre 0 et 0,46 ms.

On a donc :

$$(Tp)_{max} = 0,46\ Ts$$

On constate donc que, dans une station de base, trois chaînes de démodulation telles que décrites précédemment, décalées de $2\,\Delta T_{fft}$, suffisent à compenser la dispersion temporelle des signaux reçus (de valeur $(Tp)_{max}$).

## Revendications

**1.** Dispositif de réception d'un signal AMRF constitué par un multiplex de fréquences porteuses modulées émises par au moins deux terminaux distincts, et organisé en symboles successifs, **caractérisé en ce qu'**il comprend au moins deux chaînes de démodulation parallèles, ($21_1$ à $21_k$) chacune desdites chaînes de démodulation appliquant sur ledit signal AMRF une fenêtre temporelle de réception de symbole débutant avec un retard de chaîne ($216_1$ à $216_K$) supérieur ou égal à zéro, par rapport à une référence de synchronisation, lesdits retards de chaîne étant tous différents.

**2.** Dispositif selon la revendication 1, **caractérisé en ce que** lesdits retards de chaîne valent :

$$T_k = 2.k.\Delta$$

où :

$\Delta$ est un retard de base prédéfini ;
k est un entier variant de 0 à K-1 ;
K est le nombre de chaînes de démodulation.

**3.** Dispositif selon la revendication 2, **caractérisé en ce que** ledit retard de base $\Delta$ est le retard maximum que chacune desdites chaînes est capable de traiter, et **en ce que** le nombre de chaînes de démodulation est :

$$K = \text{Partie-entière } ((T_p)_{max}/2.\Delta)+ 1,$$

où $(T_p)_{max}$ est le délai de propagation maximum dans un échange aller-retour de communication entre ledit dispositif de réception et un desdits terminaux.

**4.** Dispositif selon l'une quelconque des revendications 1 à 3, **caractérisé en ce qu'**il comprend des moyens de sélection alimentés par l'ensemble desdites chaînes de démodulation et associant à chacune desdites fréquences porteuses, et à chaque intervalle de temps, la sortie de l'une desdites chaînes de traitement, selon un critère de sélection prédéterminé.

**5.** Dispositif selon la revendication 4, **caractérisé en ce que** chacune desdites chaînes de démodulation comprend des moyens de validation de la démodulation de chacune desdites fréquences porteuses, selon un critère de validation prédéterminé, et **en ce que** ledit critère de sélection consiste à retenir la sortie de la chaîne de démodulation répondant audit critère de validation et présentant le retard de chaîne le plus faible.

**6.** Dispositif selon l'une quelconque des revendications 1 à 5, **caractérisé en ce que** chacune desdites chaînes de démodulation comprend des moyens de démodulation par application d'une transformation mathématique ($212_1$ à $212_K$).

**7.** Dispositif selon l'une quelconque des revendications 1 à 6, **caractérisé en ce que** chacune desdites chaînes de démodulation comprend au moins certains desdits moyens suivants :

- des moyens d'application dudit retard de chaîne ;
- des moyens de filtrage ;
- une transformation de Fourier ;
- des moyens de décodage des données portées par chacune desdites fréquences porteuses ;
- des moyens de validation dudit décodage, pour chacune desdites fréquences porteuses.

**8.** Dispositif selon la revendication 7, **caractérisé en ce que** lesdits moyens de filtrage comprennent des moyens de filtrage multiporteuse de Nyquist.

**9.** Dispositif selon l'une quelconque des revendications 1 à 8, **caractérisé en ce que** les signaux portés par chacune desdites fréquences porteuses sont codés par bloc, et **en ce que** ledit dispositif comprend des moyens d'émission d'un acquittement, lorsqu'un bloc reçu est validé par au moins une desdites chaînes de démodulation.

**10.** Procédé de réception d'un signal constitué par un multiplex de fréquences porteuses modulées émises par au moins deux terminaux distincts, **caractérisé en ce qu'**il comprend au moins deux étapes de démodulation effectuées en parallèle sur l'ensemble dudit signal AMRF, chacune desdites étapes appliquant sur ledit signal AMRF une fenêtre temporelle de réception de symbole débutant avec un retard de chaîne ($216_1$ à $216_K$) supérieur ou égal à zéro, par rapport à une référence de synchronisation, lesdits retards de chaîne étant tous différents.

**11.** Système de transmission de données entre au moins deux terminaux et une station de base, chacun desdits terminaux modulant au moins une fréquence porteuse, lesdites fréquences porteuses étant organisées de façon à former un signal AMRF unique, **caractérisé en ce que** ladite station de base comprend au moins deux chaînes de démodulation parallèles ($21_1$ à $21_k$), chacune desdites chaînes de démodulation appliquant sur ledit signal AMRF une fenêtre temporelle de réception de symbole débutant avec un retard de chaîne ($216_1$ à $216_K$) supérieur ou égal à zéro, par rapport à une référence de synchronisation, lesdits retards de chaîne étant tous différents.

**Claims**

**1.** Device for receiving an FDMA signal consisting of a multiplex of modulated carrier frequencies which are output by at least two distinct terminals, and organised in successive symbols, **characterized in that** it includes at least two parallel demodulation chains ($21_1$ to $21_k$), each of the said demodulation chains applying to the said FDMA signal a symbol reception time window starting with a chain delay ($216_1$ to $216_K$) greater than or equal to zero, in relation to a synchronisation reference, the said chain delays all being different.

**2.** Device according to Claim 1, **characterized in that** the said chain delays have the following values:

$$T_k = 2.k.\Delta$$

where

$\Delta$ is a predefined base delay;
k is an integer varying from 0 to K-1;
K is the number of demodulation chains.

**3.** Device according to Claim 2, **characterized in that** the said base delay $\Delta$ is the maximum delay which each of the said chains is capable of processing, and **in that** the number of demodulation chains is:

$$K = \text{entier } ((T_p)_{max} / 2.\Delta) + 1,$$

where $(T_p)_{max}$ is the maximum propagation delay in a round trip communication exchange between the said reception device and one of the said terminals.

**4.** Device according to any of Claims 1 to 3, **characterized in that** it includes selection means which are fed by all the said demodulation chains, and associating with each of the said carrier frequencies, and each time interval, the output of one of the said processing chains, according to a predetermined selection criterion.

**5.** Device according to Claim 4, **characterized in that** each of the said demodulation chains includes means of validating the demodulation of each of the said carrier frequencies, according to a predetermined validation criterion, and **in that** the said selection criterion consists of holding back the output of the modulation chain corresponding to the said validation criterion and presenting the lowest chain delay.

**6.** Device according to any of Claims 1 to 5, **characterized in that** each of the said demodulation chains includes means for demodulation by application of a mathematical transformation ($212_1$ to $212_K$).

**7.** Device according to any of Claims 1 to 6, **characterized in that** each of the said demodulation chains includes at least some of the said following means:

- means of applying the said chain delay;

- filtering means;

- a Fourier transformation;

- means of decoding the data which each of the said carrier frequencies carries;

- means of validating the said decoding, for each of the said carrier frequencies.

8. Device according to Claim 7, **characterized in that** the said filtering means include Nyquist multi-carrier filtering means.

9. Device according to any of Claims 1 to 8, **characterized in that** the signals which each of the said carrier frequencies carries are coded by block, and **in that** the said device includes means for outputting an acknowledgment, when a received block is validated by at least one of the said demodulation chains.

10. Method of receiving a signal consisting of a multiplex of modulated carrier frequencies which are output by at least two distinct terminals, **characterized in that** it includes at least two demodulation stages which are carried out in parallel on the whole of the said FDMA signal, each of the said stages applying to the said FDMA signal a symbol reception time window starting with a chain delay ($216_1$ to $216_K$) greater than or equal to zero, in relation to a synchronisation reference, the said chain delays all being different.

11. System for transmitting data between at least two terminals and a base station, each of the said terminals modulating at least one carrier frequency, the said carrier frequencies being organised in a way to form a unique FDMA signal, **characterized in that** the said base station includes at least two parallel demodulation chains ($21_1$ to $21_k$), each of the said demodulation chains applying to the said FDMA signal a symbol reception time window starting with a chain delay ($216_1$ to $216_K$) greater than or equal to zero, in relation to a synchronisation reference, the said chain delays all being different.

**Patentansprüche**

1. Empfangsvorrichtung eines FDMA- bzw. Frequenzmultiplex-Signals, das aus einem von mindestens zwei verschiedenen Terminals gesendeten, nach aufeinander folgenden Symbolen organisierten Multiplex modulierter Trägerfrequenzen gebildet wird, **dadurch gekennzeichnet, dass** sie mindestens zwei parallele Demodulationsketten ($21_1$ bis $21_k$) umfasst, wobei jede dieser Demodulationsketten auf das FDMA- bzw. Frequenzmultiplex-Signal ein Zeitfenster für den Empfang von Symbolen anwendet, das, im Verhältnis zu einer Synchronisierungsreferenz, mit einer Kettenverzögerung ($216_1$ bis $216_k$) kleiner oder gleich null anfängt, wobei alle diese Kettenverzögerungen verschieden sind.

2. Vorrichtung nach Anspruch 1, **dadurch gekennzeichnet, dass** die Kettenverzögerungen den folgenden Wert haben:

$$T_k = 2 \cdot k \cdot \Delta$$

wobei: $\Delta$ eine im Voraus definierte Grundverzögerung ist;
k eine ganze Zahl zwischen 0 und K-1 ist;
K die Zahl der Demodulationsketten ist.

3. Vorrichtung nach Anspruch 2, **dadurch gekennzeichnet, dass** die Grundverzögerung $\Delta$ die größte Verzögerung ist, welche jede der erwähnten Ketten verarbeiten kann und, dass die Zahl der Demodulationsketten folgendermaßen ausgedrückt wird:

$$K = \text{ganzzahliger Teil } ((T_p)_{max}/2 \cdot \Delta)+1,$$

wobei $(T_p)_{max}$ die höchste Ausbreitungsverzögerung in einem hin-und-zurück Kommunikationsaustausch zwischen der Empfangsvorrichtung und einem der erwähnten Terminals ist.

4. Vorrichtung nach einem der Ansprüche 1 bis 3, **dadurch gekennzeichnet, dass** sie über Auswahlmittel verfügt, die von der Menge der Demodulationsketten gespeist werden und einer jeden Trägerfrequenz und zu jedem Zeitintervall den Ausgang einer der Verarbeitungsketten nach einem vorgegebenen Auswahlkriterium assoziieren.

5. Vorrichtung nach Anspruch 4, **dadurch gekennzeichnet, dass** jede der Demodulationsketten Mittel zum Validieren der Demodulation einer jeden Trägerfrequenz nach einem vorgegebenen Vatidierungskriterium aufweist und, dass das besagte Auswahlkriterium darin besteht, den Ausgang der Demodulationskette zu wählen, der dem Validierungskriterium entspricht und die geringste Kettenverzögerung aufweist.

6. Vorrichtung nach einem der Ansprüche 1 bis 5, **dadurch gekennzeichnet, dass** jede der Demodulationsketten Mittel aufweist, mit denen durch Anwendung einer mathematischen Transformation ($212_1$ bis $212_K$) demoduliert wird.

7. Vorrichtung nach einem der Ansprüche 1 bis 6, **da-**

**durch gekennzeichnet, dass** jede der Demodulationsketten mindestens einige der folgenden Mitteln umfasst:

- Mittel zum Anwenden der Kettenverzögerung;
- Filtermittel;
- eine Fourier-Transformation;
- von einer jeden der Trägerfrequenzen getragene Dekodiermittel;
- Validierungsmittel der Dekodierung für jede der Trägerfrequenzen.

8. Vorrichtung nach Anspruch 7, **dadurch gekennzeichnet, dass** die Filtermittel Nyquist-Mehrfachträgerfilter umfassen.

9. Vorrichtung nach einem der Ansprüche 1 bis 8, **dadurch gekennzeichnet, dass** die von einer jeden Trägerfrequenz getragenen Signale nach Blöcken kodiert sind und dass die Vorrichtung über Mittel zum Senden einer Empfangsbestätigung, wenn ein empfangener Block von mindestens einer der Demodulationsketten validiert wird, verfügt.

10. Empfangsverfahren eines Signals, das aus einem von mindestens zwei verschiedenen Terminals gesendeten organisierten Multiplex modulierter Trägerfrequenzen gebildet wird,
 **dadurch gekennzeichnet, dass** es mindestens zwei parallel zueinander ausgeführte Demodulationschritte über die Gesamtheit des FDMA- bzw. Frequenzmultiplex-Signals umfasst, wobei jeder dieser Schritte auf das FDMA- bzw. Frequenzmultiplex-Signal ein Zeitfenster für den Empfang von Symbolen anwendet, das, im Verhältnis zu einer Synchronisierungsreferenz, mit einer Kettenverzögerung ($216_1$ bis $216_k$) kleiner oder gleich null anfängt, wobei alle diese Kettenverzögerungen verschieden sind.

11. System zum Senden von Daten zwischen mindestens zwei Terminals und einer Basisstation, wobei jedes der Terminals mindestens eine Trägerfrequenz moduliert, wobei diese Trägerfrequenzen so organisiert sind, dass sie ein einziges FDMA- bzw. Frequenzmultiplex-Signal bilden,
 **dadurch gekennzeichnet, dass** die Basisstation mindestens zwei parallele Demodulationsketten ($21_1$ bis $21_k$) umfasst, wobei jede dieser Demodulationsketten auf das FDMA- bzw. Frequenzmultiplex-Signal ein Zeitfenster für den Empfang von Symbolen anwendet, das im Verhältnis zu einer Synchronisierungsreferenz, mit einer Kettenverzögerung ($216_1$ bis $216_k$) kleiner oder gleich null anfängt, wobei alle diese Kettenverzögerungen verschieden sind.

**Fig. 1**

Acquittement — 19

11 — 12 CAN — 13 Fenêtrage — 14 Filtrage de Nyquist — 15 FFT — 16 Mémorisation blocs — 17 Décodage blocs — 18 Validation blocs — 110

**Fig. 2**

Acquittement — 22 — 23

CAN

Retard 1 ($216_1$) — Filtrage de Nyquist (2111) — FFT (2121) — Mémorisation blocs (2131) — Décodage blocs (2141) — Validation blocs (2151) — 211

Retard 2 ($216_2$) — Filtrage de Nyquist (2112) — FFT (2122) — Mémorisation blocs (2132) — Décodage blocs (2142) — Validation blocs (2152) — 212

Retard K ($216_K$) — Filtrage de Nyquist (211K) — FFT (212K) — Mémorisation blocs (213K) — Décodage blocs (214K) — Validation blocs (215K) — 21K

Concentrateur de blocs — 24

Ts

31

Symbole i

t

Fenêtre FFT

32

## Fig. 3

45

Tp

43

Symbole i porteuse p

Symbole i porteuse p'

t

Fenêtre FFT

41

42

44

+/-ΔTfft

## Fig. 4

Tp

43

Symbole i porteuse p

Symbole i porteuse p'

t

Fenêtre FFT num 0

41

51

+/-ΔTfft

Fenêtre FFT num 1

52

## Fig. 5